(19) Europäisches Patentamt

European Patent Office

Office européen des brevets

(11) Numéro de publication : **0 223 644**
**B1**

(12) **FASCICULE DE BREVET EUROPÉEN**

(45) Date de publication du fascicule du brevet :
26.04.89

(21) Numéro de dépôt : 86402198.5

(22) Date de dépôt : 06.10.86

(51) Int. Cl.⁴ : **F 16 H   1/08,** B 29 C  45/26,
B 29 D  15/00, B 29 C  45/44,
B 29 C  33/44

(54) **Ensemble d'engrenages moulés à dentures hélicoidales.**

(30) Priorité : 16.10.85 FR 8515348

(43) Date de publication de la demande :
27.05.87 Bulletin 87/22

(45) Mention de la délivrance du brevet :
26.04.89 Bulletin 89/17

(84) Etats contractants désignés :
CH DE GB IT LI SE

(56) Documents cités :
BE–A–   425 691
DE–A– 2 714 020
FR–A– 1 400 399
GB–A– 2 018 176
US–A– 1 803 295
US–A– 3 694 127
US–A– 3 724 803

(73) Titulaire : **ECIA - EQUIPEMENTS ET COMPOSANTS
POUR L'INDUSTRIE AUTOMOBILE**
**F-25400 Audincourt (Doubs) (FR)**

(72) Inventeur : **Bertot, Maurice Marcel
3, rue du Quinze Deux
F-70300 Luxueil Les Bains (FR)**

(74) Mandataire : **Moncheny, Michel et al**
c/o Cabinet Lavoix 2 Place d'Estienne d'Orves
**F-75441 Paris Cedex 09 (FR)**

Jouve, 18, rue St-Denis, 75001 Paris, France

## Description

La présente invention concerne les engrenages à dentures hélicoïdales et elle se rapporte plus particulièrement à un ensemble d'engrenages moulés à dentures hélicoïdales.

La fabrication d'engrenages par moulage est particulièrement intéressante notamment en raison du gain de poids appréciable qui résulte du remplacement d'un métal par une matière plastique, et de la réduction des prix de revient de telles pièces, le taillage à la fraise ou au couteau pouvant être remplacé par un moulage en grande série.

Par ailleurs, les progrès en matière de résistance des matières plastiques, ont permis de diversifier les applications de tels engrenages, notamment en micromécanique, en mécanique générale et dans le domaine de l'automobile.

Dans certaines applications, il est nécessaire de disposer d'un ensemble d'engrenages étagés soit à dentures droites, soit à dentures hélicoïdales, et on sait qu'il est plus économique de mouler un ensemble d'engrenages plutôt que de rapporter l'un contre l'autre et coaxialement, des engrenages unitaires.

La fabrication et plus particulièrement le démoulage d'un ensemble moulé d'engrenages étagés à dentures droites, comme décrit dans le document BE-A-425 691, est relativement facile, ce qui n'est pas le cas pour un ensemble d'engrenages étagés à dentures hélicoïdales.

En effet, le démoulage d'un engrenage à denture hélicoïdale s'effectue par un déplacement, par exemple de cet engrenage par rapport à une empreinte, ce déplacement se décomposant en une rotation $\alpha$ combinée à une translation t où t est proportionnelle à $\alpha$ :

$$t = k \, \alpha$$

Si $\alpha$ est exprimée en radians et si P est le pas de l'hélice de l'engrenage, exprimé en mm et tracé sur le cercle primitif de l'engrenage, le déplacement de celui-ci par rapport à l'empreinte pour $\alpha$ = 2 $\pi$ est égal à t millimètre, d'où les relations suivantes :

$$K = P/2 \, \pi, \text{ et}$$

$$t = \alpha \times P/2 \, \pi$$

On constate donc que si dans un ensemble d'engrenages à dentures hélicoïdales, les coefficients K des engrenages sont différents, on ne peut pas démouler l'ensemble d'engrenages étagés par une seule translation et une seule rotation.

Jusqu'à présent, les engrenages d'un tel ensemble d'engrenages étaient réalisés séparément puis assemblés coaxialement pour former ledit ensemble.

On connait également un dispositif permettant de mouler deux engrenages coaxiaux à dentures hélicoïdales de caractéristiques différentes.

Ce dispositif comporte deux empreintes mobiles en rotation l'une par rapport à l'autre, pour permettre le démoulage des deux engrenages.

Un tel dispositif est relativement complexe et d'un coût de fabrication relativement élevé. D'autre part, le fait que les empreintes sont mobiles l'une par rapport à l'autre, nuit à la précision de l'ensemble moulé.

Le but de l'invention est donc de résoudre les problèmes évoqués ci-dessus en proposant un ensemble d'engrenages moulés à dentures hélicoïdales qui soit particulièrement bien adapté à une fabrication par moulage.

A cet effet, l'invention a pour objet un ensemble moulé d'engrenages à dentures hélicoïdales formant une pièce unique et comprenant un groupe de pignons étagés coaxiaux, dont les dentures ont le même sens d'hélice, caractérisé en ce que, Mrn et Mri désignant les modules réels des pignons de rang n et de rang i quelconques respectivement du groupe, Zn et Zi désignant les nombres de dents desdits pignons et $\beta n$ et $\beta i$ désignant les angles d'hélice de ceux-ci, il existe entre ces différents paramètres, la relation suivante :

$$\sin \beta n = \sin \beta i \times Mrn \; Zn/Mri \; Zi$$

Selon un autre aspect, l'invention a également pour objet un dispositif pour la fabrication par moulage d'un ensemble tel que défini précédemment, caractérisé en ce qu'il comporte une première partie de moule définissant une surface plane et comprenant des moyens d'injection de matière, une seconde partie de moule disposée en regard de la première, comprenant une empreinte délimitant avec ladite surface plane, une cavité de moulage, cette empreinte étant formée d'une seule pièce et taillée pour reproduire ledit ensemble, et des moyens d'éjection dudit ensemble, de ladite empreinte.

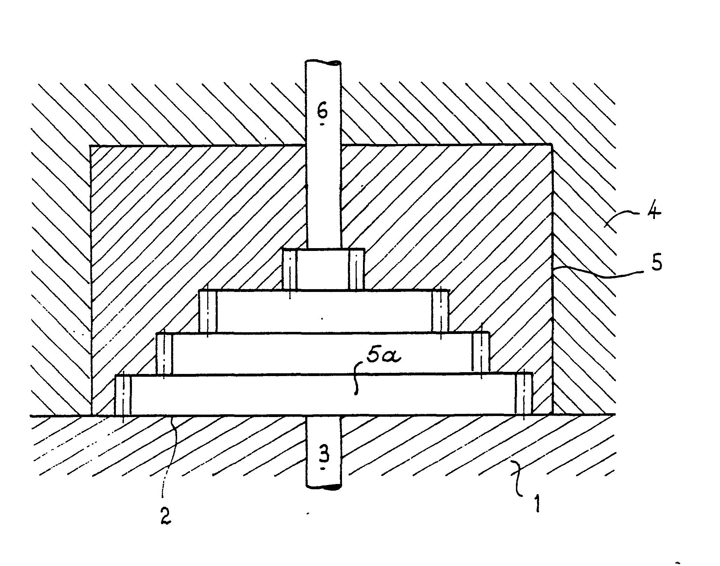

L'invention sera mieux comprise à l'aide de la description qui va suivre, donnée uniquement à titre d'exemple et faite en se référant au dessin annexé qui représente un dispositif pour la fabrication par moulage d'un ensemble selon l'invention.

Ainsi qu'on peut le voir sur ce dessin, le dispositif pour la fabrication par moulage d'un ensemble selon l'invention comporte une première partie de moule 1 définissant une surface plane 2 et des moyens d'injection de matière 3. Ce dispositif comporte également une seconde partie de moule 4 disposée en regard de la première, et comprenant une empreinte 5 délimitant avec ladite surface plane de la première partie de moule, une cavité de moulage 5a.

Cette empreinte 5 est formée d'une seule pièce et est taillée de manière à reproduire un ensemble qui sera décrit plus en détail par la suite.

Le dispositif selon l'invention comporte également des moyens d'éjection 6 de l'ensemble d'engrenages, de ladite empreinte, ces moyens s'étendant à travers ladite empreinte et ladite seconde partie de moule.

L'empreinte 5 est taillée pour reproduire un ensemble d'engrenages moulés à dentures hélicoïdales, comprenant un groupe de pignons coaxiaux, par exemple quatre, dont les dentures ont les mêmes sens d'hélice et le même pas.

Le démoulage d'une seule pièce d'un tel ensemble d'engrenages impose que les pignons de l'ensemble présentent certaines caractéristiques.

Ainsi, si Mrn et Mri désignent les modules réels des pignons de rang n et de rang i quelconques respectivement du groupe, Zn et Zi désignent les nombres de dents desdits pignons et $\beta n$ et $\beta i$ désignent les angles d'hélice de ceux-ci, il doit exister entre ces différents paramètes, la relation suivante :

$$\sin \beta n = \sin \beta i \; Mrn \; Zn/Mri \; Zi$$

Une telle relation entre les paramètres des différents pignons permet d'obtenir un démoulage de l'ensemble en une seule opération de rotation combinée à une translation telles que décrites précédemment.

Il est à noter que les différents moyens de déplacement de l'ensemble d'engrenages et des parties de moule, étant bien connus dans l'état de la technique, on ne les décrira pas plus en détail.

La relation mentionnée précédemment permet de déterminer par exemple, les angles d'hélice des différents pignons constituant l'ensemble, à partir de l'angle d'hélice d'un pignon déterminé, pour que le démoulage de l'ensemble puisse s'effectuer en une seule opération.

Ainsi par exemple, si l'on désire fabriquer un ensemble de trois pignons pour lesquels on a les caractéristiques suivantes :

— Premier pignon : Z1 = 101 dents, Mr1 = 0,6 et $\beta 1 = 35°$ qui est fixé par exemple pour une application donnée ;
— Deuxième pignon : Z2 = 70 dents, Mr2 = 0,8 ;
— Troisième pignon : Z3 = 50 dents, Mr3 = 1 ;

Il est nécessaire que les angles d'hélice des différents pignons répondent à la relation mentionnée précédemment pour que le démoulage puisse être effectué en une seule opération.

Le calcul de l'angle d'hélice du second pignon se fait donc par la relation :

$$\sin \beta 2 = \sin \beta 1 \times Mr2 \times Z2/Mr1 \times Z1 \; ;$$
d'où
$$\sin \beta 2 = 0,530037631 \text{ et } \beta 2 = 32°00'29''$$

Le calcul de l'angle d'hélice du troisième pignon s'effectue de manière analogue :

$$\sin \beta 3 = \sin \beta 1 \times Mr3 \times Z3/Mr1 \times Z1$$
d'où
$$\sin \beta 3 = 0,4732478848 \text{ et } \beta 3 = 28°14'43''$$

A titre de vérification, on peut par exemple calculer l'angle d'hélice du troisième pignon à partir du second et on a alors :

$$\sin \beta 3 = 0,530037631 \times 1 \times 50/0,8 \times 70$$
d'où
$$\sin \beta 3 = 0,4732478848 \text{ et } \beta 3 = 28°14'43''$$

## Revendications

1. Ensemble moulé d'engrenages à dentures hélicoïdales formant une pièce unique et comprenant un groupe de pignons étagés coaxiaux, dont les dentures ont le même sens d'hélice, caractérisé en ce que, Mrn et Mri désignant les modules réels des pignons de rang n et de rang i quelconques respectivement du groupe, Zn et Zi désignant les nombres de dents desdits pignons et $\beta n$ et $\beta i$ désignant les angles d'hélice de ceux-ci, il existe entre ces différents paramètres, la relation suivante :

$$\sin \beta n = \sin \beta i \; Mrn \; Zn/Mri \; Zi.$$

2. Dispositif pour la fabrication par moulage d'un ensemble selon la revendication 1, caractérisé en ce qu'il comporte une première partie de moule (1) définissant une surface plane (2) et comprenant des moyens d'injection (3) de matière, une seconde partie de moule (4) disposée en regard de la première, comprenant une empreinte (5) délimitant avec ladite surface plane une cavité de moulage (5a), cette empreinte étant formée d'une seule pièce et taillée pour reproduire ledit ensemble, et des moyens d'éjection (6) dudit ensemble, de ladite empreinte.

## Claims

1. Set of moulded gears with helical teeth forming a single unit and comprising a set of coaxial tiered pinions of which the teeth have the same helical direction, characterized in that, where Mrn and Mri designate the real moduli of the pinions of any rank n and i, respectively, of the set, Zn and Zi designate the numbers of teeth of said pinions and $\beta n$ and $\beta i$ designate their helix angles, the following relationship exists between these different parameters :

$$\sin \beta n = \sin \beta i \; Mrn \; Zn \; / \; Mri \; Zi.$$

2. Apparatus for the production by moulding of a set according to claim 1, characterized in that it comprises a first mould section (1) defining a planar surface (2) and including means (3) for the injection of material, a second mould section (4) arranged opposite the first, including a matrix (5) which defines, together with said planar surface, a moulding cavity (5a), this matrix being formed in a single piece and shaped in order to reproduce the said set, and means (6) for ejecting the said set from the said matrix.

**Patentansprüche**

1. Geformte Anordnung von Zahnrädern mit Schraubverzahnung, die ein einzelnes Stück bildet und eine Gruppe von aufeinandergesetzten koaxialen Ritzeln aufweist, deren Zähne die selbe Schraubenrichtung aufweisen, dadurch gekennzeichnet, daß Mrn und Mri die reellen Zahnmodule der Zahnritzel irgendeiner Reihe n bzw. einer Reihe i der Gruppe bezeichnen, Zn und Zi die Anzahl der Zähne der Zahnritzel bezeichen und βn und βi deren Schraubwinkel bezeichnen, wobei zwischen diesen verschiedenen Parametern die folgende Gleichung besteht :

$$\sin \beta n = \sin \beta i \times Mrn \times Zn / Mri \times Zi.$$

2. Vorrichtung für die Herstellung einer Anordnung nach Anspruch 1 durch Formen, dadurch gekennzeichnet, daß sie einen ersten Formbereich (1), der eine ebene Oberfläche (2) definiert und Materialeinspritzeinrichtungen (3) aufweist, einen gegenüber dem ersten angeordneten zweiten Formbereich (4), der einen Stempel oder eine Matrize (5) aufweist, die mit der ebenen Oberfläche einen Formhohlraum (5a) begrenzt, wobei die Matrize aus einem einzigen Stück geformt und zugeschnitten ist, um die Anordnung zu reproduzieren, und Auswurfeinrichtungen (6) der Anordnung aus der Matrize aufweist.